**Europäisches Patentamt**

**European Patent Office**

**Office européen des brevets**

(11) Publication number : **0 516 474 A1**

## (12) EUROPEAN PATENT APPLICATION

(21) Application number : **92304954.8**

(22) Date of filing : **29.05.92**

(51) Int. Cl.⁵ : **A01F 25/02, B65G 5/00**

(30) Priority : **31.05.91 GB 9111698**

(43) Date of publication of application :
**02.12.92 Bulletin 92/49**

(84) Designated Contracting States :
**AT BE CH DE DK ES FR GB IT LI NL SE**

(71) Applicant : **Sloman, David Eric**
**Poughill**
**Bude, Cornwall EX23 9HL (GB)**

(72) Inventor : **Sloman, David Eric**
**Poughill**
**Bude, Cornwall EX23 9HL (GB)**

(74) Representative : **Craske, Stephen Allan**
**Craske & Co. 1 Southernhay West**
**Exeter, South Devon EX1 1JG (GB)**

(54) **Bulk storage of liquids.**

(57) A pit 1 is excavated with sloping sides surrounded by a trench 7, and drainage channels 5 in the bottom of the pit leading to an inspection pit 6. A layer of underlay 10 is spread in the pit followed by a bag 12 which is formed of pvc sheet incorporating a vinyl ethylene terpolymer alloy. The bag includes upper and lower sheets 14 and 15, with the lower sheet incorporating a woven reinforcing scrim. The two sheets, sealed around their peripheries, are inserted in the trench 7 where the underlay 10 is folded over the edges of the bag before the trench is backfilled. The back-turned edges of the underlay are secured to a timber frame 25 to which safety netting 26 is secured over the pit. An inlet conduit 18 leads via a liquid trap 19 to tank connectors 16, and an outlet conduit 20 leads from the lowermost part of the bag, through a tank connector 16, via a pump 22.

FIG 2

EP 0 516 474 A1

## TECHNICAL FIELD OF THE INVENTION

This invention relates to the bulk storage of liquids, particularly (but not exclusively) liquids which require to be stored free from contact with air.

## BACKGROUND

Grass juice is an example of a liquid which must be stored under air-free conditions.

The average diary farmer stores around 1,500 tons of green grass (silage) during the summer months to use as animal feed during the winter. In storage, grass silage can rapidly produce a sweet-smelling, sugar-rich liquid known as grass juice, which forms a nutritious animal feed in its own right. 1,000 tons of silage can produce up to 50,000 gallons of grass juice, but contact with atmospheric oxygen can cause the bacteria which are normally present in grass juice to turn this liquid into a pungent foul-smelling liquid known as silage effluent. This effluent is often collected in slurry pits and used as a fertiliser, but this is an inefficient use of the material. Moreover, silage effluent can cause enormous pollution problems should it find its way into waterways.

At the present time, grass juice is not generally utilised by farmers since the cost of collecting and storing the liquid in air-free conditions is prohibitive.

The present invention may be viewed as being to provide a relatively inexpensive system for collecting and storing a liquid such as grass juice under air-free conditions.

## SUMMARY OF THE INVENTION

The present invention proposes a method for the bulk storage of a liquid, which comprises digging a pit in the ground to receive a sealed bag formed of a flexible sheet material which is impermeable to air and to the liquid, placing the bag in the pit in a deflated condition, and feeding the liquid into the bag through inlet conduit means which is sealably connected to the bag.

The invention also includes a bulk liquid storage installation comprising a pit containing a sealed bag formed of a flexible sheet material which is impermeable to air and to the liquid, the bag including inlet conduit means which is sealably connected to the bag.

In order to ensure that air is effectively excluded from the bag prior to use it has been found that the best form of bag comprises superimposed upper and lower sheets of substantially identical size and shape which are sealably joined around their peripheries.

The edges of the bag are preferably buried around the perimeter of the pit.

The pit is preferably lined by a layer of underlay beneath the bag. The underlay is preferably folded back over the edges of the bag in order to protect them. The periphery of the underlay is preferably secured to a frame to which a safety mesh is secured to cover the pit.

The flexible sheet material may be of an elastomeric material such as butyl rubber. It has been found however that whilst elastomeric materials are of adequate strength they are expensive and are more difficult to join. Polymeric thermoplastics materials are therefore preferred. High density polyethylene (HDPE) can be used for example, although low density polyethylene (LDPE) will generally give superior results. The preferred material is polyvinyl chloride (pvc). Sheet pvc which incorporates a uv stabiliser generally gives an acceptable life span, although this material will eventually degrade on exposure to the environment. However, the most suitable material which is currently available is a form of pvc sheet called ATIM ELVA in which the normal plasticisers have been replaced by a vinyl ethylene terpolymer alloy known as ELVALOY (Dupont RTM). This material has a normal life span in excess of 30 years. There is no embrittlement with time or at low temperatures and the material has good weather resistance.

The bottom area of the bag is normally required to be stronger than the top region, and preferably at least the bottom region of the bag is formed of sheet material which contains a woven reinforcement. The reinforcement may be of Nylon or polyester. There is preferably a substantially equal layer of the sheet material on both sides of the reinforcement to allow sections of the sheet to be bonded with good strength. The bonding may be achieved by existing methods such as heat welding or by use of suitable solvent adhesives.

Since a large part of the bag is exposed to the environment the sheet material preferably includes an anti-fungal agent.

The inlet conduit may include a liquid trap to prevent air from entering the bag. Although the liquid may be withdrawn from the bag via the inlet conduit there is preferably a separate outlet conduit sealably connected to the bag. To ensure that most of the liquid can be removed from the bag if required, the outlet conduit preferably projects into the bag to its lowermost region. The bag may conveniently have at least one connector provided at each end for the inlet/outlet conduits, so that the user can use the most convenient connectors, any unused connectors being sealably closed.

As a safeguard, the base of the pit is preferably provided with drainage pipes leading to an inspection manhole to enable any escape of effluent to be detected at an early stage by manual inspection of the manhole.

## BRIEF DESCRIPTION OF THE DRAWINGS

The invention is exemplified in the accompanying drawings, in which:

Figure 1 is longitudinal vertical section through a bulk liquid storage installation of the invention,

Figure 2 is a plan view of the installation,

Figure 3 is a detailed sectional view of part of the installation, and

Figure 4 is a further detail of an outlet conduit used in the installation.

## DETAILED DESCRIPTION OF THE DRAWINGS

The first stage of installation involves excavating a pit 1 to the required dimensions (see Fig.s 1 and 2). The pit is generally rectangular with sloping sides 2, and the bottom 3 of the pit is also inclined downwardly towards the intended extraction end 4. Drainage channels 5 are cut longitudinally into the bottom 3 of the pit to receive a perforated drainage pipe leading to an inspection hole 6 positioned outside the boundary of the pit 1. The channels 5 may be back-filled with coarse gravel around the drainage pipe. In addition, a trench 7 is dug around the entire periphery of the pit 1.

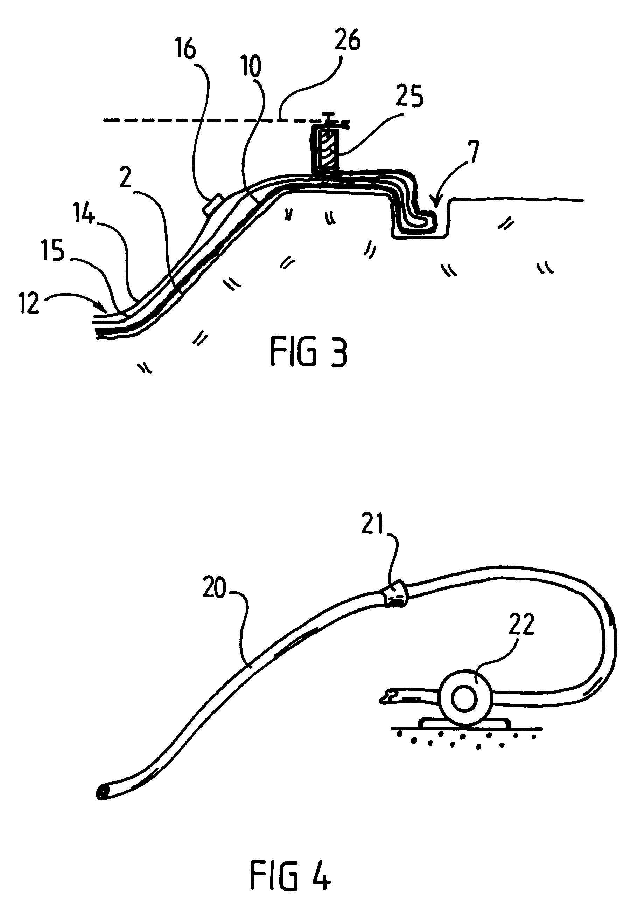

The excavated pit 1 is blinded with sand or sifted topsoil, following which an underlay sheet 10 (see Fig. 3 detail) is spread into the pit ensuring a good overlap around the periphery of the pit and beyond the trench 7. Any tough material can be used as an underlay, such as pvc sheet or a woven polypropylene such as TERAN or POLYFELT. The pit is now ready to receive a bag 12.

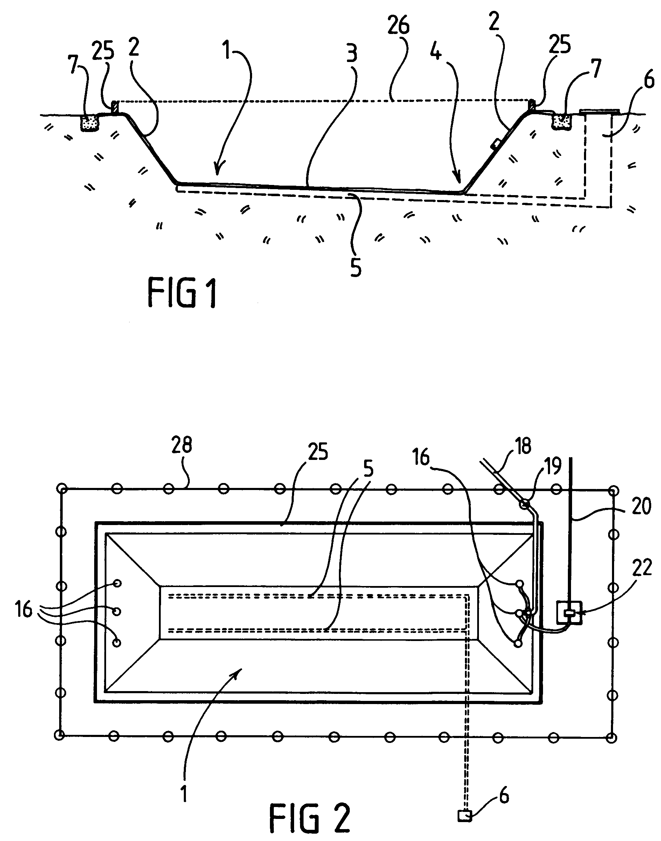

The bag 12 is formed of ATIM ELVA sheet (see above for details) which incorporates a reinforcing scrim of polyester fibres having a mesh size of about 3mm. The scrim is covered by an equal layer of the pvc material on each side. The sheet is also treated with a fungicide. Superimposed rectangular upper and lower sheets 14, 15 of the material are heat sealed together around their entire periphery. In order to form a bag of the required size it may be necessary to form the upper and lower sheets of several smaller sheets which are also joined by heat sealing. A cost saving could be achieved without decreasing the strength of the bag by omitting the reinforcing scrim from the top layer 14. The upper layer 14 is provided with three tank connectors 16 at each end so that the bag can be opened out either way around in the bottom of the pit. As can be seen in Fig. 2, the three tank connectors at each end of the pit are arranged in line, equal distances from the adjacent shorter edge of the bag 12. As shown in more detail in Fig. 3, the edges of the underlay 10 are now folded back over the edges of the bag 12, which are inserted into the trench 7.

A branched flexible inlet conduit 18 is sealably coupled to the two outer tank connectors 16 at the extraction end of the pit, and this conduit leads via an S-trap 19, installed as close as possible to the edge of the pit, to an adjacent silage clamp (not shown). A flexible outlet conduit 20 (see Fig. 4 detail) is inserted into the central tank connector 16 which is sealably connected to the conduit 20 by means of a sealing ring 21. The outlet conduit 20 passes through the tank connector and travels to the bottom of the tank at the extraction end to ensure optimum draw-off of liquid. The opposite end of the conduit 20 leads via an electric self-priming mono pump 22 to a header tank (not shown) or to any other point of use.

The unused tank connectors 16 at the shallower end of the pit are sealed by suitable closure members.

For safety purposes a timber frame 25 is placed around the perimeter of the pit 1 upon the turned back edge of the underlay 10 (see Fig. 3 detail). The edge of the underlay is then folded back over the inner and top faces of the frame 25, and a layer of safety netting 26 is placed over the bag 12. The netting 26 is then secured to the frame 25 by nailing through the netting and underlay into the frame. Prior to back filling the trench 7 a quantity of water is pumped into the pit on top of the bag 12. This ensures that the bag is a snug fit in the bottom of the pit and ensures that as much air as possible is expelled from the bag. The trench 7 is then back filled to bury the peripheral edge of the bag which is covered by underlay. It will be noted that since the peripheral portion of the underlay is buried at its outer edge and nailed to the frame at its inner edge, the frame is securely held against inward movement. The frame thus in turn holds the netting 26 taught to prevent children or animals from falling into the pit. In accordance with good farming practice a perimeter fence 28 (Fig. 2) must be erected around the entire area for additional safety.

Liquid grass juice from the silage clamp can be gravity fed into the bag via the inlet conduit 18 and S-trap 19. Grass juice could also be fed into the bag by means of a submersible pump for example, in which case the S-trap would not be required since the pump itself acts as an air trap. Since the bag 12 is completely sealed the liquid is held therein under air-free conditions, and the product can thus be stored indefinitely in this way. When the liquid is required for use it is pumped from the bag via the outlet conduit 20.

Should there be any leakage of stored liquid from the bag this will tend to drain via the channels 5 into the manhole 6 where it can be quickly detected by manual inspection.

As well as being used for storage of grass juice the installation could also be used for storing other liquids in air-free conditions such as fruit juices, beer or wines products, or effluent from jam factories. Liquids which are not required to be stored under air-free conditions could, of course, also be stored in the bag with little risk of contamination.

It will be appreciated that the pit could be created by digging a hole into the ground and/or by raising an earth bank above ground level. Under permeable ground conditions it is advisable to include a liquid-impermeable liner between the underlay and the bag as an additional safeguard in the event of leakage.

**Claims**

1.  A liquid storage facility characterised by a pit containing a sealed bag formed of a flexible sheet material which is impermeable to air and to the liquid, the bag including inlet conduit means which is sealably connected to the bag.

2.  A liquid storage facility according to Claim 1, in which the bag comprises superimposed upper and lower sheets of substantially identical size and shape which are sealably joined around their peripheries.

3.  A liquid storage facility according to Claim 1 or 2, in which the edges of the bag are buried around the perimeter of the pit.

4.  A liquid storage facility according to any preceding claim, in which the pit is lined by a layer of underlay placed beneath the bag and folded back over the edges of the bag, and the periphery of the underlay is secured to a frame to which a safety mesh is secured to cover the pit.

5.  A liquid storage facility according to any preceding claim, in which the bag is formed of polyvinyl chloride containing a vinyl ethylene terpolymer alloy.

6.  A liquid storage facility according to any preceding claim, in which the bottom region of the bag is formed of sheet material which contains a woven reinforcement.

7.  A liquid storage facility according to any preceding claim, in which the inlet conduit means includes a liquid trap.

8.  A liquid storage facility according to any preceding claim, in which outlet conduit means extends from the lowermost region of the bag and passes sealably out of the bag.

9.  A liquid storage facility according to any preceding claim, in which the base of the pit is provided with drainage pipes leading to an inspection manhole.

10. A method for the bulk storage of a liquid, characterised by forming a pit in the ground to receive a sealed bag formed of a flexible sheet material which is impermeable to air and to the liquid, placing the bag in the pit in a deflated condition, and feeding the liquid into the bag through inlet conduit means which is sealably connected to the bag.

FIG 1

FIG 2

FIG 3

FIG 4

European Patent
Office

**EUROPEAN SEARCH REPORT**

Application Number

EP    92 30 4954

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 034 023 (V. FURMAN)<br>* page 6, line 23 - line 33; figures *<br>--- | 1-3,8,10 | A01F25/02<br>B65G5/00 |
| A | FR-A-818 551 (M. R. WENZELIDES)<br>* page 1, line 26 - page 2, line 7; figures *<br>--- | 1-4 | |
| A | GB-A-813 067 (F. J. G. BUELENS)<br>* page 2 * | 1,10 | |
| | ----- | | |
| | | | TECHNICAL FIELDS SEARCHED (Int. Cl.5 ) |
| | | | A01F<br>B65G |

The present search report has been drawn up for all claims

| Place of search | Date of completion of the search | Examiner |
|---|---|---|
| BERLIN | 09 SEPTEMBER 1992 | MARTIN DEL RIO A. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P0401)